# EUROPEAN PATENT APPLICATION

(11) **EP 2 112 073 A2**
(43) Date of publication of application: **28.10.2009**
(21) Application number: 09158314.6
(22) Date of filing: 21.04.2009
(51) Int. Cl.: B65B 51/22, B65B 9/06, B29C 65/16

(54) **Improved machine for packaging products in a heat-sealable film**

(30) Priority: 22.04.2008 IT MI20080730
(71) Applicant: ILAPAK INTERNATIONAL S.A., 6926 Collina d'Oro (CH)
(72) Inventor: Tinivella, Valter, 21052 Busto Arsizio - VA (IT)
(74) Representative: De Gregori, Antonella

(57) **Abstract**

A machine for packaging products in a heat-sealable film comprises a longitudinal welding group (13) of two side flaps (14) of film to close the tube-shaped film at the side and a transversal welding group (15) of the tube of film between the products. The welding groups (13, 15) comprise welding surfaces (24, 30) that are intended to come into contact with the film and that are heated by electrical resistances to a welding temperature and that are supported and actuated through moving means (17, 21) for their welding movement with respect to the film. The welding surfaces with the respective electrical resistances of at least one of the welding groups (13 or 15) form a welding body (26 or 32) that is separated from the respective moving means (17 or 21) through interposition of a body (27 or 33) of thermally insulating material.

## Description

The present invention refers to a machine for packaging products in a heat-sealable film.

In technology packaging machines are known in which a strip of film is wrapped in a tube around products to be packaged that run in sequence to reach a welding area in which special longitudinal welding devices weld together the two side edges of the film to close the tube at the side and transversal welding jaws squash and weld together the tube of film between the products to make the packet.

Various systems for welding the film have been proposed, but the most cost-effective and widely-used one consists of hot elements (for example jaws or rollers) that come into contact suitably squashing the film between them.

Since the hot elements are mounted on mechanical members that support them and cause their suitable welding movement, much of the energy applied to them for heating is dispersed actually in the mechanical members. This makes the system inefficient, even if it is partially functional. It is inefficient with regard to environmental protection and power consumption, and it is partially functional since the temperature is distributed non-uniformly on the surface of the hot element that will come into contact with the film.

The general purpose of the present invention is to avoid the aforementioned drawbacks by providing a more efficient and functional machine.

In view of such a purpose, it has been thought of, according to the invention, to make a machine for packaging products in a heat-sealable film, in which at least one band of film forms a tube of film around a sequence of products, and which comprises a longitudinal welding group of side flaps of film to close the tube at the side and a transversal welding group of the tube of film between the products, the welding groups comprising welding surfaces intended to make contact with the film, which are heated by electrical resistances to a welding temperature and that are supported and actuated through moving means for their welding movement with respect to the film, **characterised in that** the welding surfaces with the respective electrical resistances of at least one of the welding groups form a welding body that is separated from the respective moving means through interposition of a body of thermally insulating material.

In order to make the explanation of the innovative principles of the present invention and its advantages compared to the prior art clearer, hereafter, with the help of the attached drawings, we shall describe a possible example embodiment applying such principles. In the drawings:
- figure 1 represents a schematic perspective partial view of a machine according to the invention;
- figure 2 represents an exploded schematic view of a welding jaw of the machine of figure 1;
- figure 3 represents an exploded schematic view of a welding roller of the machine of figure 1.

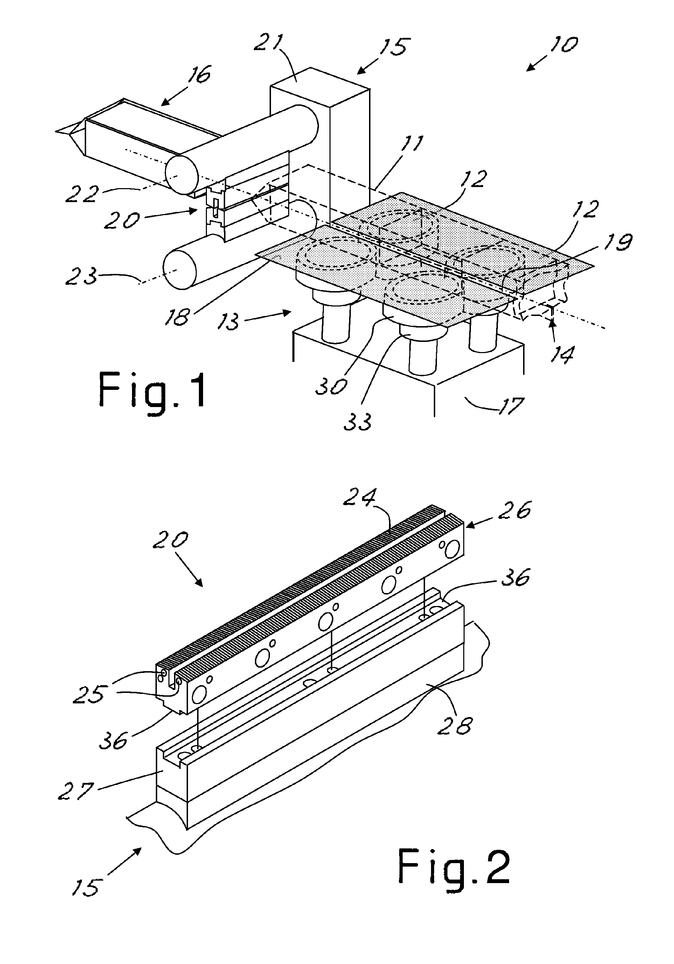

With reference to the figures, figure 1 schematically shows a machine, generically indicated with 10, made according to the principles of the invention for packaging products in a heat-sealable film (for example a film that can be sealed with temperatures of around 150°C).

According to the prior art, the banded film is fed and wrapped longitudinally to form a tube of film 11 around a sequence of products 12 fed to the machine (the whole thing shown for the sake of clarity with a broken line in figure 1). The means for feeding and wrapping the band of film and for feeding the products are not shown, since they are *per sé* well known and easy for the man skilled in the art to imagine.

The machine comprises a first longitudinal welding group 13 of two side flaps 14 of film to close the tube longitudinally (at the bottom), and a second transversal welding group 15 of the tube of film between the products, so as to make the package (one of which is indicated with 16 at the outlet of the transversal welding group).

The first welding group advantageously comprises pairs of opposite hot rollers between which the flaps 14 to be welded pass. In the embodiment of the figure there are advantageously two pairs for better welding. The rollers are supported and actuated by moving means 17 for their welding movement with respect to the film. In the case of the rollers, such a welding movement is a rotation around axes substantially parallel to the plane defined by the flaps 14 of the film. In the embodiment shown, the products are supported by a plane 18 equipped with a slit 19 for the passage of the flaps 14 and the rollers 13 are arranged under such a plane 18.

In an alternative embodiment, the rollers 13 can be arranged above the tube of film 11, so that the flaps 14 are above. Otherwise, they can be arranged at the side, to that the flaps 14 are at the side. Moreover, two groups 13 of rollers could be used simultaneously placing them on both the right and left side. In this case the rube 11 would be replaced by two films, one of which comes from below and the other comes from above, which couple together at the entry of the rollers obtaining bags made up of four welds instead of three. The solution to be adopted, as can easily be imagined by the man skilled in the art, depends upon the type of product to be packaged and the type of package that it is wishes to obtain.

The second welding group 15 advantageously comprises a pair of jaws 20 transversal to the tube of film and actuated by respective moving means 21 to close in synchrony with the movement of the tube of film to carry out the welding in a foreseen space of the tube between two successive products to be packaged separately. The welding movement given to the jaws by the moving means 15 is advantageously a rotation around the axes 22, 23 parallel to the welding surface of the jaws and with a speed synchronised with the running of the film, so as to allow a precise welding with the tube and the products in movement. In an alternative embodiment, the movement given by the moving means of the jaws can be rectilinear, for opening and closing transversally to the welding plane, possibly coupled with a translation movement synchronised with the running of the film, as can easily be imagined by the man skilled in the art. The machine can also be of the vertical type.

Figure 2 shows greater detail of one of the two jaws 20 (the other being substantially the same) in the area of the welding surface 24 intended for making contact with the film. Such surfaces are heated to a welding temperature, suitable for the heat-sealable material used for the film, by means of electrical resistances 25 housed under the welding surface and in good thermal contact with it for a uniform distribution of heat along the welding surfaces. The welding surfaces 24 with the respective electrical resistances 25 form a welding body 26 that is thermally insulated with respect to the support and moving means 15 through interposition of a body 27 of thermally insulating material.

Advantageously, the welding surface is a face of an elongated metallic block 26 that forms the welding body, and the thermally insulating body 27 is a corresponding elongated insulating block arranged between the welding body and a fastening support 28 to the moving means. The resistances can be linear resistances arranged along the extension of the body 26. The welding surface is divided in two by a groove in which a blade (and a counter blade in the body 27 in opposition) can be housed, so as to carry out two parallel welds to simultaneously close two successive packs at the top and at the bottom and to separate them.

In an alternative embodiment, the thermally insulating body 27 can be fixed directly to the moving means through suitable machining of the respective contact surfaces.

Advantageously, the connection surfaces between welding body and thermally insulating body are made with a matching grooved coupling 36, as shown in figure 2.

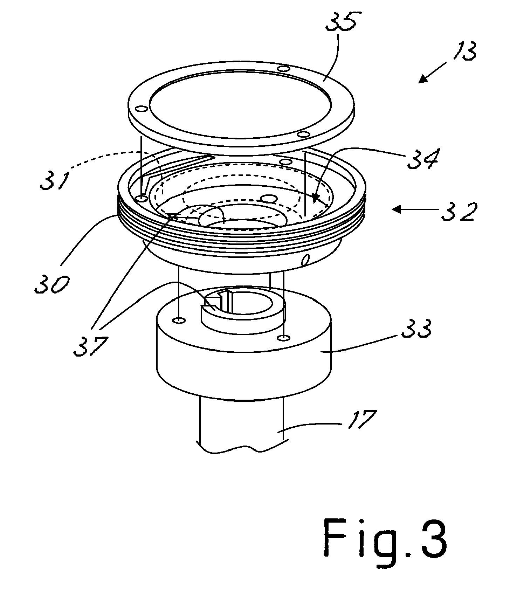

Figure 3 shows greater detail of one of the rollers 13 (the others being substantially the same) in the area of the welding surface 30 intended to make contact with the film.

Such a surface 30 is heated to the welding temperature by means of electrical resistances 31 (broken line in figure 2) inserted in the housing 34 next to the welding surface and in good thermal contact with it for a uniform distribution of heat along the welding surfaces. The resistances can, for example, be disc-shaped or toroidal, advantageously with the heating part embedded in a shaped aluminium body.

The welding surfaces 30 with respective electrical resistances 31 (for example toroidal and immersed in a cylindrical block, in the case of the shape of the housing 34) form a welding body 32 that is thermally insulated with respect to the support and moving means 17 through interposition of a body 33 of thermally insulating material.

Advantageously, the welding body 32 is formed from a cup-shaped metallic hollow roller the peripheral surface of which constitutes the welding surface 30. In an alternative embodiment, on the inside along the side wall thickness there can be seats for receiving the heating resistances. In this way, the mass of the welding body is reduced further.

The cup-shaped roller is closed on top by a cover 35 made from metal like the roller itself.

The cover 35 can also advantageously be made from thermally insulating material. Advantageously, the use of a cover or, in any case of an athermic plate, on the upper face of the rollers, reduces the heat dispersed on top and that could otherwise disadvantageously heat up the surfaces 18 on which the products run.

The thermally insulating body 27 is advantageously shaped like a disc axially arranged between the roller that makes the welding body and the rotary shaft of the moving means 17.

Advantageously, the connection surfaces between welding body and thermally insulating body are made with a matching grooved coupling 37, as shown in figure 3 to achieve a correct axial centring of the welding body.

At this point it is clear how the preset purposes have been accomplished, thanks to the fact that the welding groups comprise welding surfaces intended to make contact with the film which, with the respective electrical resistances, form a body that is insulated from the respective moving means through interposition of a body of thermally insulating material.

The material of the thermally insulating bodies can, advantageously, be a resin with sufficient machinability and mechanical strength for use as an alternative to metal, with a resistance to the temperatures (for example of around 150°C) suitable for the welding of the film and with heat conductivity of about 0.25-0.30 W/(K m). A suitable resin has been found in polyetheretherketone (PEEK) resin, which, moreover, has a melting point much greater than 250°C.

With the solution according to the invention the mass to be heated of the welding groups is greatly reduced compared to the prior art and there is a uniform temperature distribution in them, containing the heating disuniformities, without other provisions, within a range of between 1 and 3°C, compared to the 15-40°C of the prior art. Moreover, the time taken to reach the welding temperature from room temperature is reduced by more than a factor of 3 (for example from 26 minutes to just 8 minutes during experimental laboratory tests that were carried out on prototypes). Moreover, the contact surface with the surrounding air is reduced, which has been found to be particularly important for rotary jaws, which move the air.

There is a substantial reduction in power for the initial heating of the welding surfaces and to keep them at the right temperature (for example, experimental tests have shown an energy saving of 66% for the jaws and of 45% for the rollers). This, as well as reducing the operating costs, also means that smaller and therefore less expensive heating resistances are needed. Moreover, the use of smaller resistances that are closer to the surface to be heated further increases the uniformity of the temperature.

The more homogeneous temperature increases the welding efficiency, which allows greater speeds of the machine or allows the use of films that are more difficult to weld, and decreases the dishomogeneity in the dilations of the welding element between centre (normally hotter where the jaws are more dilated for which reason they squash more) and right and left periphery (normally colder and therefore less dilated and less squashed, i.e. where the bags of the packaging run the risk of remaining open).

The lower weight of the moving welding elements also contributes to lower energy consumption, since less power and torque is required of the motor of the moving means.

Moreover, since it does not transmit the welding heat towards the moving members, they are under less strain and are less subject to failures. For example, the bearings of the rotary shafts last longer and the maintenance interventions are reduced.

The upper surface of the rollers made from heat-absorbing material allows little heat to be irradiated to the planes above which the products to be packaged runs. Therefore, it is possible to avoid provisions used in known machines, such as the water-cooled planes, otherwise necessary to avoid the product and/or the film deteriorating during the passage over the area of the rollers. The thickness of the water-cooled planes of the prior art also means that it is difficult to wrap the products tightly, and therefore with the present solution film is saved and the appearance of the packages is improved.

Of course, the description made above of an embodiment applying the innovative principles of the present invention is given as an example of such innovative principles and therefore it must not be taken to limit the scope of protection claimed here. For example, even just a single welding group could be equipped with the thermally insulating body, in the case in which the heat dispersion of the other one were already satisfactory or it's reduction were considered to be unnecessary. For example, even just the transversal jaws equipped with thermally insulating body can already contribute to greatly reducing the consumption of a machine and improving functionality. The welding bodies can be screwed into the insulating bodies or otherwise fastened to them (for example, the resin can be moulded directly on the welding body). The movements of the welding jaws can be different from as shown.

## Claims

1. Machine for packaging products in a heat-sealable film, in which at least one band of film forms a tube of film (11) around a sequence of products, and that comprises a longitudinal welding group (13) of side flaps (14) of film to close the tube at the side and a transversal welding group (15) of the tube of film between the products, the welding groups (13, 15) comprising welding surfaces (24, 30) intended to make contact with the film, which are heated by electrical resistances (25, 31) to a welding temperature and which are supported and actuated through moving means (17, 21) for their welding movement with respect to the film, **characterised in that** the welding surfaces with the respective electrical resistances of at least one of the welding groups (13 o 15) form a welding body (26 or 32) that is separated from the respective moving means (17 or 21) through interposition of a body (27 or 33) of thermally insulating material.

2. Machine according to claim 1, **characterised in that** the transversal welding group (15) comprises a pair of jaws (20) with the welding surfaces (24) that for welding are brought into contact with each other with interposition of the tube of film.

3. Machine according to claim 2, **characterised in that** for the welding movement the jaws (20) of the pair rotate around respective parallel axes (22, 23).

4. Machine according to claim 2, **characterised in that** the welding surface of the jaw is a face (24) of an elongated metallic block (26) that forms the welding body, and the body of thermally insulating material is a corresponding elongated insulating block (27) arranged between the welding body (26) and a fastening support (28) on the moving means.

5. Machine according to claim 4, **characterised in that** the resistances (25) are linear resistances arranged along the extension of the welding body (26).

6. Machine according to claim 5**, characterised in that** the connection surfaces between welding body (26) and heat insulating body (27) are made with a matching grooved coupling (26).

7. Machine according to claim 1, **characterised in that** the longitudinal welding group (13) comprises at least on pair of rotary rollers (13) containing the heating resistances and with side surfaces (30) that make welding surfaces in mutual contact with interposition of the side flaps (14) of the tube of film.

8. Machine according to claim 7, **characterised in that** the body of thermally insulating material (33) is axially arranged between the roller (32) that makes the welding body and a rotary shaft of the moving means (17).

9. Machine according to claim 8, **characterised in that** connection surfaces between welding body and body of thermally insulating material are made with a matching grooved coupling (37) to achieve an axial centring of the welding body.

10. Machine according to claim 7, **characterised in that** the roller (32) is cup-shaped with a top closing cover (35) made from heat-absorbing material under a sliding surface (18) of the tube of film with the products.

11. Machine according to claim 1**, characterised in that** the body of thermally insulating material is made from resin with heat conductivity of around 0.25-0.30 W/(K m).

12. Machine according to claim 1, **characterised in that** the body of thermally insulating material is made from a polyetheretherketone (PEEK) resin.
